**Europäisches Patentamt**

(19) **European Patent Office**

**Office européen des brevets**

(11) Veröffentlichungsnummer: **0 096 738**
**B1**

(12) # EUROPÄISCHE PATENTSCHRIFT

(45) Veröffentlichungstag der Patentschrift:
**27.12.85**

(21) Anmeldenummer: **83104200.7**

(22) Anmeldetag: **29.04.83**

(51) Int. Cl.⁴: **C 01 B 3/00**

(54) **Verfahren zur Durchführung von chemischen Reaktionen unter Beteiligung von atomarem Wasserstoff.**

(30) Priorität: **03.05.82 DE 3216391**

(43) Veröffentlichungstag der Anmeldung:
**28.12.83 Patentblatt 83/52**

(45) Bekanntmachung des Hinweises auf die Patenterteilung:
**27.12.85 Patentblatt 85/52**

(84) Benannte Vertragsstaaten:
**AT BE CH DE FR GB IT LI LU NL SE**

(56) Entgegenhaltungen:
**DE - C - 301 364**

(73) Patentinhaber: **VEBA OEL AG,**
**Alexander-von-Humboldt-Strasse,**
**D-4650 Gelsenkirchen-Hassel (DE)**

(72) Erfinder: **Wolfrum, Jürgen, Prof. Dr., Südring 2,**
**D-3405 Rosdorf 2 (Obernjesa) (DE)**
Erfinder: **Warnatz, Jürgen, Dr., Blumenstrasse 13,**
**D-6901 Neckarsteinach (DE)**
Erfinder: **Bruderreck, Hartmut, Dr.,**
**Bärenkampstrasse 55, D-4660 Gelsenkirchen-Buer (DE)**
Erfinder: **Gottlieb, Klaus, Dr., Alte Strasse 59,**
**D-5804 Herdecke-Ende (DE)**
Erfinder: **Preuss, August-Wilhelm, Dr., Riedweg 22,**
**D-4270 Dorsten (DE)**

(74) Vertreter: **Krug, Joachim, Dr.,**
**Alexander-von-Humboldt-Strasse,**
**D-4650 Gelsenkirchen-Hassel (DE)**

# Beschreibung

Die vorliegende Erfindung betrifft ein Verfahren zur Durchführung chemischer Reaktionen, an denen atomarer Wasserstoff beteiligt ist. Es handelt sich um chemische Reaktionen, die durch Radikale eingeleitet werden und als Kettenreaktionen ablaufen. Für viele derartige Reaktionen ist atomarer Wasserstoff zum Starten und Weiterführen geeignet. So bewirkt atomarer Wasserstoff beispielsweise die Dehydrierung von Alkanen, die Hydrierung von Alkenen, die Spaltung von Kohlenwasserstoffen, die Abspaltung von Alkylgruppen aus Alkylaromaten, die Bildung von Hydrazin aus Ammoniak.

Die Anwendung von atomarem Wasserstoff bei der Dampfspaltung von Kohlenwasserstoffen zur Erzeugung von Olefinen ist in JP-AS 72 43 522 beschrieben. Hier wurde der atomare Wasserstoff insbesondere durch Erhitzen von molekularem Wasserstoff auf 2900° C mittels eines Plasmastroms erzeugt. Trotz der hohen Temperatur, die mit energieaufwendigen Verfahren erzeugt werden muß, enthält der molekulare Wasserstoff nur 5% atomaren Wasserstoff.

Nach anderen dort beschriebenen Verfahren wird der atomare Wasserstoff durch Zersetzung einer weiteren Komponente in Gegenwart von molekularem Wasserstoff erzeugt. Als weitere Komponente werden genannt Kohlenwasserstoffe und andere niedermolekulare organische Verbindungen.

Durch die Zersetzung der zugesetzten Komponente entstehen Radikale, die in Folgeschritten aus dem molekularen Wasserstoff atomaren Wasserstoff erzeugen. Die Zersetzung erfolgt durch Pyrolyse oder partielle Verbrennung des Zusatzes.

Andere, insbesondere in der Grundlagenforschung verwendete Verfahren erzeugen atomaren Wasserstoff durch stille elektrische Entladungen in molekularem Wasserstoff, durch Photolyse wasserstoffhaltiger Verbindungen oder durch Mikrowellenentladungen von molekularem Wasserstoff in einem inerten Medium. Allen diesen Verfahren zur Gewinnung von atomarem Wasserstoff ist es eigen, daß atomarer Wasserstoff in relativ geringen Konzentrationen und mit relativ hohem Energieaufwand gewonnen wird.

Aus DE-C-301 364 ist ein Verfahren zur Erhöhung der Wirksamkeit von Wasserstoff für katalytische Reaktionen bekannt, bei dem Wasserstoff mit einem Zusatz von geringen Mengen von Luft oder Sauerstoff über einen Aktivierungskatalysator geleitet wird, wodurch alle schädlichen Beimengungen des Wasserstoffs vernichtet werden sollen.

Für die Anwendung in technischen Prozessen ist es notwendig, atomaren Wasserstoff in einer möglichst einfachen Anordnung bei möglichst geringem Energieaufwand in hoher und dabei steuerbarer Konzentration zu gewinnen.

Erfindungsgemäß dient hierfür die Verbrennung von molekularem Wasserstoff mit einer unterstöchiometrischen Menge an Sauerstoff. Dabei kann sowohl Reinsauerstoff als auch Luft als Sauerstoffquelle verwendet werden. In der Wasserstoff-Sauerstoff-Flamme läuft die Verbrennung des Wasserstoffs als Kettenreaktion ab. Durch den Überschuß an Wasserstoff werden in der Nachreaktionszone der Flamme hohe Wasserstoffatom-Konzentrationen aufgebaut. Durch Variation des Wasserstoff- zu Sauerstoffverhältnisses kann die Konzentration der Wasserstoffatome gesteuert werden und gleichzeitig die Konzentration sauerstoffhaltiger Radikale völlig unterdrückt werden. Im allgemeinen wird ein $H_2/O_2$-Molverhältnis von 2,3—5,0, vorzugsweise 2,8—4,0 angewendet. Durch die Geometrie der Brenneranordnung und durch Variationen des Drucks im Brennerraum kann die Lebensdauer der erzeugten H-Atome gesteuert werden. Ein weiteres Merkmal zur Ausführung der chemischen Reaktion ist die Zuführungsanordnung für den jeweiligen Reaktanden. Diese Anordnung zeichnet sich dadurch aus, daß der Reaktand unmittelbar am Ort der Entstehung der H-Atome, insbesondere in der erwähnten Nachreaktionszone so zugemischt wird, daß die Erzeugung der H-Atome dadurch nicht beeinflußt wird.

In der eingangs erwähnten JP-AS wird auch die partielle Verbrennung von Methan zur Erzeugung von Kohlenwasserstoffradikalen beschrieben, die mit von außen zugesetztem molekularen Wasserstoff atomaren Wasserstoff bilden. Bei dieser Art der Erzeugung von Wasserstoff-Atomen entstehen als Nebenprodukte hauptsächlich Radikale, die unerwünschte Folge- und Nebenreaktionen auslösen. Das gebildete, in geringen Mengen H-Atome enthaltende Reaktionsendgemisch des Brenners wird in eine räumlich getrennte zweite Verfahrensstufe geführt, in der ein Mitteldestillatschnitt (182—255° C) mit dem zuvor beschriebenen Reaktionsgemisch bei 800° C und einer Verweilzeit von 0,72 sec umgesetzt wird.

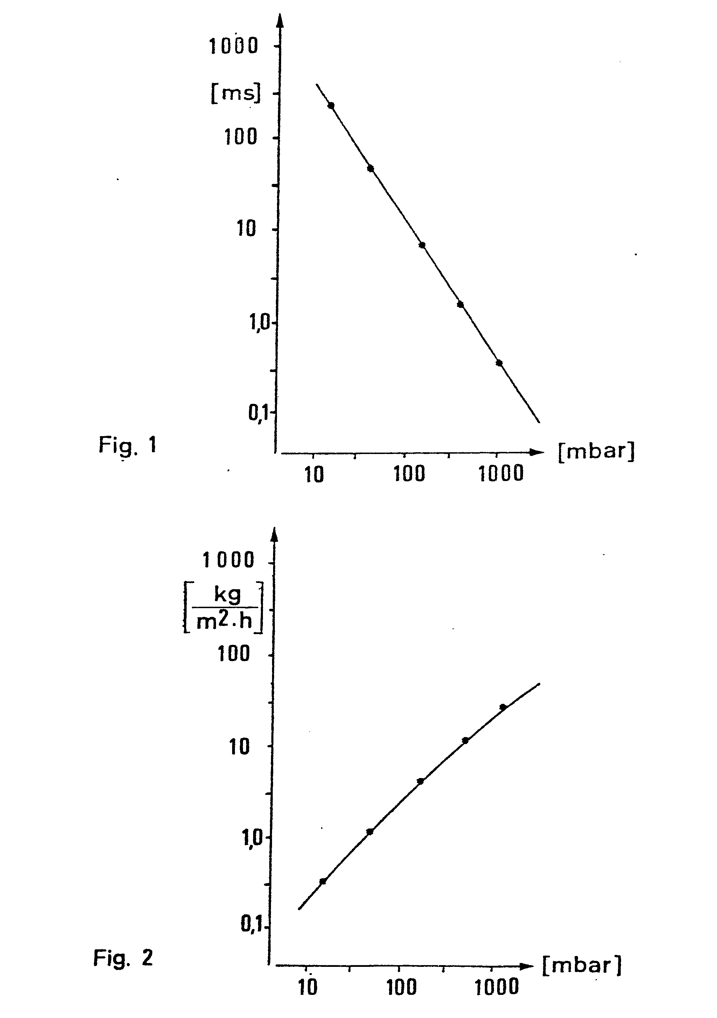

Gemäß vorliegender Erfindung werden H-Atome in einer brennstoffreichen Wasserstoff-Sauerstoff- oder Wasserstoff-Luft-Flamme insbesondere bei Unterdruck erzeugt. Dabei wird entweder eine Vormischflamme (mit entsprechenden Sicherheitsvorkehrungen) benutzt, oder die Flamme auf einem Multidiffusionsbrenner stabilisiert. Je nach Höhe des eingestellten Druckes werden in der Nachreaktionszone der Flamme H-Atom-Konzentrationen bis zu 30 Mol-% aufgebaut. Die Lebensdauer der H-Atome liegt bei Drücken von 10 mbar bis Atmosphärendruck zwischen 300 ms und 0,3 ms. In Fig. 1 ist für eine Wasserstoff-Luftflamme die Halbwert-Lebensdauer der H-Atome in ms in Abhängigkeit vom Druck in mbar dargestellt. Die Flüsse an H-Atomen betragen in diesem Druckbereich zwischen $0,3 \text{ kg/m}^2\text{h}$ und $300 \text{ kg/m}^2\text{h}$. Fig. 2 zeigt den H-Atomfluß in $\text{kg/m}^2\text{h}$ in Abhängigkeit vom Druck in mbar ebenfalls für eine Wasserstoff-Luftflamme.

Zur Erzielung eines maximalen Umsatzes muß ein optimaler Druck gewählt werden. Er ergibt sich aus der Forderung nach hohem H-Atomfluß bei ausreichend hoher Lebensdauer der Wasserstoffatome, um eine vollständige Durchmischung mit dem Reaktanden zu erreichen. In der Regel liegt der günstigste Druck zwischen 10 und 1500 mbar, bevorzugt wird der Bereich von 10 bis 900 mbar, insbesondere 50 bis 500 mbar. Erfolgt die Durchmischung durch Diffusionsprozesse, so liegt der günstigste Druckbereich für eine Wasserstoff-Luft-Flamme z. B. bei 400 mbar. In diesem Falle kann ein Wasserstoff-Atomfluß von 10 kg/m²h erzeugt werden. Die für die Reaktion günstigste Temperatur ist durch eine geeignete Vorrichtung im Reaktandenzufluß, z. B. einem Wärmetauscher einstellbar.

### Patentansprüche

1. Verfahren zur Durchführung von chemischen Reaktionen unter Beteiligung von atomarem Wasserstoff, dadurch gekennzeichnet, daß der atomare Wasserstoff durch Verbrennen von molekularem Wasserstoff mit einer unterstöchiometrischen Menge Sauerstoff insbesondere bei einem Molverhältnis von molekularem Wasserstoff zu molekularem Sauerstoff von 2,3 bis 5,0 bei Drücken zwischen 10 mbar und 1,5 bar erzeugt und der Reaktand am Ort der Entstehung des atomaren Wassrstoffs zugeführt wird.

2. Verfahren nach Anspruch 1, dadurch gekennzeichnet, daß die teilweise Verbrennung des molekularen Wasserstoffs bei Drücken zwischen 10 bis 900 mbar, vorzugsweise 50 bis 500 mbar erfolgt.

3. Verfahren nach Anspruch 1 oder 2, dadurch gekennzeichnet, daß das Molverhältnis von molekularem Wasserstoff zu molekularem Sauerstoff 2,8 bis 4,0 beträgt.

### Claims

1. Process for performing chemical reactions with participation of atomic hydrogen, characterised in that, the atomic hydrogen is generated by the combustion of molecular hydrogen with a substoichiometric quantity of oxygen, particulary with a mole ratio of molecular hydrogen to molecular oxygen in the range of 2.3 to 5.0, at pressures between 10 mbar and 1.5 bar and the reactant is supplied at the point of development of the atomic hydrogen.

2. Process according to Claim 1, characterised in that, the partial combustion of the molecular hydrogen is effected at pressures between 10 and 900 mbar, preferably between 50 and 500 mbar.

3. Process according to Claim 1 or 2, characterised in that, the molar ratio of molecular hydrogen to molecular oxygen is in the range of 2.8 to 4.0.

### Revendications

1. Procédé pour la réalisation de réactions chimiques auxquelles doit participer de l'hydrogène atomique, caractérisé en ce que l'hydrogène atomique est produit par combustion d'hydrogène moléculaire avec une proportion hypostoechiométrique d'oxygène, en particulier avec un rapport molaire entre l'hydrogène moléculaire et l'oxygène moléculaire de 2, 3 à 5, sous des pressions qui se situent entre 10 mbar et 1,5 bar, et que le réactant est amené à l'endroit même où se forme l'hydrogène atomique.

2. Procédé suivant la revendication 1, caractérisé en ce que la combustion partielle de l'hydrogène moléculaire s'opère sous des pressions qui se situent entre 10 et 900 mbar, ou mieux entre 50 et 500 mbar.

3. Procédé suivant l'une des revendications 1 et 2, caractérisé en ce que le rapport moléculaire entre l'hydrogène moléculaire et l'oxygène moléculaire se monte à 2, 8 à 4.

Fig. 1

Fig. 2

5